# EUROPEAN PATENT SPECIFICATION

(11) **EP 3 007 322 B1**
(45) Date of publication and mention of the grant of the patent: **01.01.2020**
(21) Application number: 14472006.7
(22) Date of filing: 16.10.2014
(51) Int. Cl.: H02K 1/27, H02K 1/30

(54) **Brushless electrical machine with permanent magnets**
Bürstenlose elektrische Maschine mit Permanentmagneten
Machine électrique sans balais à aimants permanents

(30) Priority: 07.10.2014 BG 11183614
(43) Date of publication of application: 13.04.2016
(73) Proprietor: "Dimex Motors" AD, 1000 Sofia (BG)
(72) Inventor: Popov, Encho, 1421 Sofia (BG)
(74) Representative: Lekova, Tatyana Boyanova

(56) References cited:
- CA-A1- 2 381 148
- DE-A1-102004 031 329
- JP-A- 2010 004 630
- US-A1- 2014 117 804

## Description

### FIELD OF THE INVENTION

The present invention relates to brushless electrical machine with permanent magnet excitation with increased resistance to demagnetization of the permanent magnets designed for operation as traction motors in electrically driven vehicles, for regulable motors for drives in machine tools with CNC and for other servo-drives and generators running into overload duty.

### DESCRIPTION OF PRIOR ART

A brushless electrical machine with permanent magnet excitation with increased resistance to demagnetization is known from reference /1/ including drive shaft with fixed on it rotor yoke made of steel sheets. In the rotor yoke near its surface are formed chordwise axial rectangular slots with stationary placed therein permanent magnets with parallelepiped form. The number of slots and the magnets is equal to the number of poles of the electrical machine. Above the magnet of each pole is arranged a part of the rotor yoke to form a segment of a circle. Each segment is connected immovably, by means of thin strips to the inside of the rotor yoke. The rotor is encompassed by a cylindrical stator. The stator is fixed to comprising it cylindrical housing closed by a front and rear end bells. The drive shaft is supported on bearings in the front and rear end bells. On the inner surface of the stator are arranged a plurality of slots. In the slots is located three-phase winding.

Disadvantage of the known electrical machine is the reduced reluctance created mainly by the air gap between rotor and stator on the path of the magnetic flux generated by the stator winding. As a result, the value of the cross magnetic flux is increased and the demagnetization effect of this cross magnetic field is also increased. Another disadvantage is the increased value of the inductive reactance of the stator winding, due to the increased value of the cross magnetic field and the differential leakage of the stator winding. The result is increased inductive voltage drop in the stator winding and the increased value of the current and electrical losses in the winding.

A disadvantage is also the reduction of the effective magnetic flux due to the diversion of a portion of the magnetic flux generated by the permanent magnets, directly to the rotor yoke through the strips holding the sectors over the magnets without passing through the air gap between the rotor and the stator. In case of higher number of poles the reduction of the effective magnetic flux is increased.

As a result of the disadvantages the known electrical machine with permanent magnet excitation has a reduced power due to reduced utilization of the electromagnetic materials in it at establishing the rotation speed and the torque. Increased is also the mass of active parts and the permanent magnets. The growth of mass is increased at smaller numbers of poles.

It is known from CA 2 381 148 A1 a brushless electric machine with permanent magnets comprising a drive shaft, having fixed thereto a rotor yoke of the magnetic system. On the yoke are set firmly permanent magnets, and the rotor yoke through the shaft is supported on bearings in front and rear end bells. Between them a housing is closed, wherein is fixed a stator with a plurality of slots on its inner surface and three-phase winding is laid therein. The rotor yoke is divided in equal parts, wherein on any two adjacent edges of said parts is formed common mounting pad, which is disposed in a plane perpendicular to the radius passing through the middle between the adjacent edges, forming the common mounting pads, and through the middle of the permanent magnets, which are mounted immovably on the common pads. The adjacent edges of the parts are tapered and between them void spaces are formed.

This known solution does not provide for lowering the cross magnetic flux and for reduction of the mass of the electric machine. Also the known machine due to the comparatively high cross magnetic flux has a reduced power.

### SUMMARY OF THE INVENTION

The aim of the invention is to create brushless electrical machine with permanent magnets with increased power.

This object is achieved by an electric machine according to the invention as defined in claim 1, with permanent magnets comprising drive shaft with fixed on it rotor yoke of the magnetic system, on which yoke are set firmly permanent magnets. Rotor yoke through the shaft is supported on bearings in front and rear end bells, between them a housing is closed, wherein is fixed a stator with a plurality of slots on its inner surface and three-phase winding is laid therein. According to the invention the rotor yoke is divided in equal parts which are fixed on one or more non-magnetic discs which are attached immovably on the shaft. On each of two adjacent edges of the rotor yoke is formed a common mounting pad, which lies in a plane perpendicular to the radius passing through the middle between the adjacent edges forming the common pads, and in the middle of permanent magnets which are mounted immovably on those common pads. The adjacent edges of the rotor yoke parts are tapered and between those yoke parts are formed void spaces with trapezoidal cross-section with small base A1 near the permanent magnets and the large base A2 bounded by non-magnetic disks, so that the ratio of the larger base A2 towards the small base A1 is greater than 10.

An advantage of the brushless electrical machine with permanent magnet excitation according to the invention is the increased resistance to demagnetization of the magnets by the magnetic field of the stator winding at higher values of current of the stator winding, due to the increased reluctance in the path of this magnetic field through the created void non-magnetic spaces between adjacent parts of the rotor yoke and under the middle of the permanent magnets. At the same time, by bringing out the permanent magnets just next to the air gap, their whole magnetic flux is working, even at an increased number of poles. Reduced are both the differential leakage of the stator winding and the cross fields in the area of each pole, created by the stator winding. Thus, the inductance and the inductive reactance of the stator winding are reduced. In this way at a given power and speed of rotation are reduced the current of the electrical machine and the electrical losses in the stator winding, combined with increased resistance to demagnetization of the magnets. The mass of the yoke of the rotor and the stator where the magnetic flux passes through is also reduced. The mass of the permanent magnets put in is reduced too.

### BRIEF DESCRIPTION OF THE DRAWINGS

The invention is illustrated by means of applied figures where
FIG.1 represents cross-section of the brushless electrical machine;
FIG.2 represents longitudinal-section through the middle between two magnets of the brushless electrical machine

### DETAILED DESCRIPTION OF THE PREFERRED EMBODIMENTS

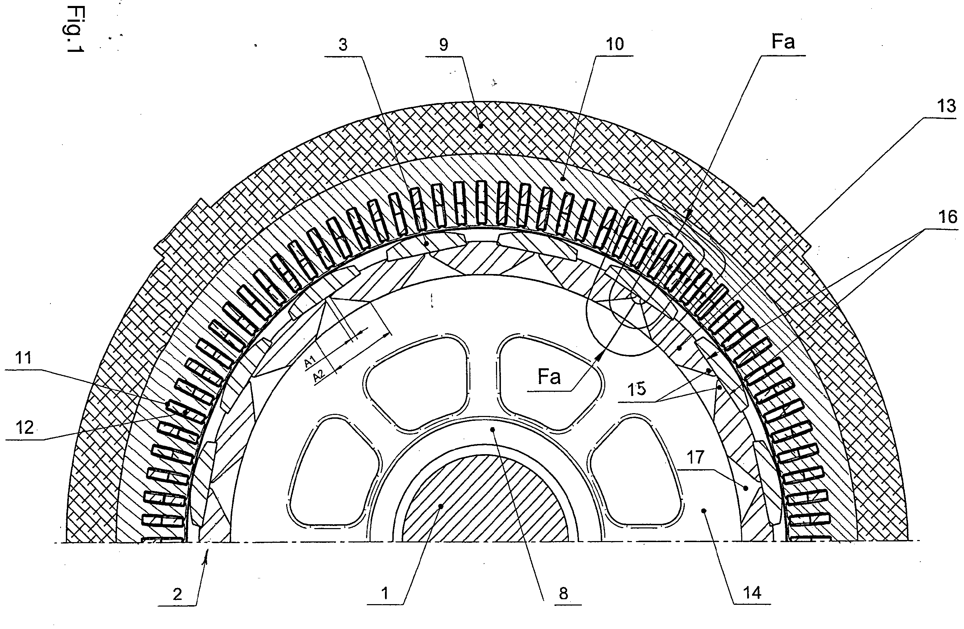

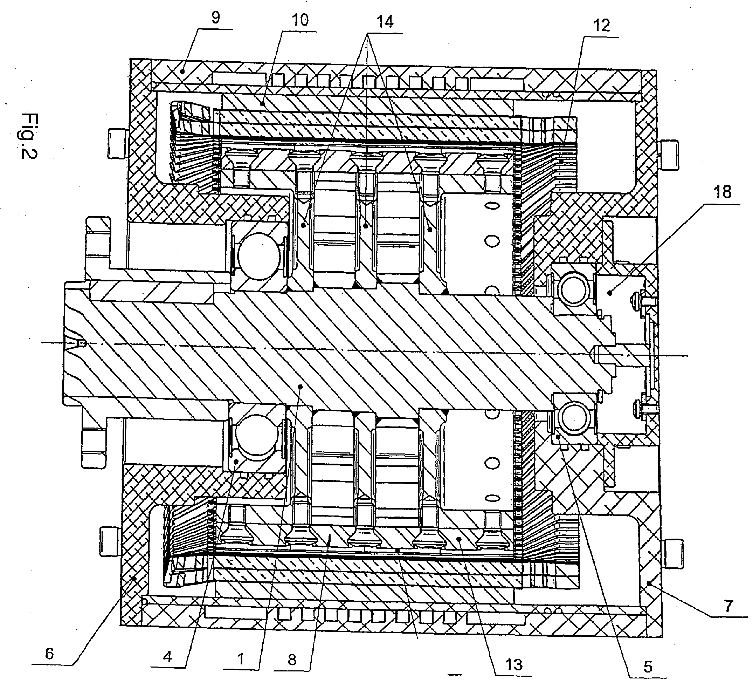

In an example embodiment of the invention shown on FIG.1 and FIG.2 the brushless electrical machine comprises drive shaft 1. On the drive shaft 1 is fixed rotor yoke 2. Permanent magnets 3 are set firmly and uniformly on the periphery of the yoke 2. The shaft 1 is supported on front bearing 4 and rear bearing 5 (Fig.2) in front end bell 6 and rear end bell 7. To the shaft 1 is fixedly connected rotor 8. Between the front end bell 6 and the rear end bell 7 housing 9 is closed. In the housing 9 is fixed stationary stator 10. On the inner surface of the stator 10 are formed a plurality of slots 11 wherein three-phase winding 12 is laid.

The rotor yoke 2 is divided in plurality of equal parts 13 whose number is equal to the number of permanent magnets 3. Each part 13 is fixedly attached directly or via a non-magnetic sleeve, not shown in the figures, on one or more non-magnetic disks 14. Each non-magnetic disc 14 is attached immovably on the shaft 1. On any two adjacent edges 15 of the parts 13 of the rotor yoke 2 is formed a common mounting pad 16, which is disposed in a plane perpendicular to the radius passing through the middle between the adjacent edges 15 forming the common pads 16, and through the middle of permanent magnets 3 which are mounted immovably on the common pads 16. The adjacent edges 15 of the parts 13 are tapered and between them are formed void spaces 17 with trapezoidal cross-section with small base A1 near the permanent magnets 3 and the large base A2 bounded by non-magnetic disks 14. The ratio of the larger base A2 towards the small base A1 is greater than 10. The void spaces 17 are areas with great reluctance, through which pass the cross magnetic fields Fa, created by the three-phase stator winding 12. In the space 18 outside the rear bearing 5 in the region of rear end bell 5 is mounted a control sensor, not shown in the figures. At the same time the magnetic fields forming the differential leakage of the stator winding 12 pass through permanent magnets 3 which are zone with high reluctance for these fields.

### ACTION OF THE BRUSHLESS ELECTRICAL MACHINE

At the operation of the brushless electric machine as a motor or generator, the whole magnetic flux generated by the permanent magnets 3 is working. Repeatedly is reduced the value of the cross magnetic field Fa. The reduction is accomplished by the creation of a high reluctance of the void non-magnetic spaces 17 through which passes the magnetic flux generated by the cross magnetic field of the stator three-phase winding 12. The magnetic fields of the differential leakage generated by the three-phase winding 12 are also reduced, compared with the known electrical machine as the permanent magnets 3, through which they pass are with high reluctance. By the reduction of these fields is reduced the inductive reactance and the current for realizing a certain power and driving torque as compared with the known electrical machine. At the same time, by the increased number of poles the mass of the electric machine in comparison with the known electrical machine is also reduced.

### EXPERIMENTAL RESULTS RECEIVED BY REALISING THE INVENTION

It is compared a virtual model according to the invention with that of a known solution from reference /1/. The comparison is made under the following conditions:
- the same maximum power, 80 kW .;
- the same maximum torque;
- the same speed of rotation;
- the same battery voltage;
- the same efficiency;
- the same cooling method - by liquid.

In the model according to the invention the mass of active parts, including permanent magnets is reduced by about 40%, mainly due to the full utilization of the magnetic flux generated by the permanent magnets in case of an increased number of poles. Meanwhile, the cross magnetic field of the stator winding and its effect on reducing the magnetic flux and to increase the inductive reactance of the stator winding is reduced to minimum values.

### REFERENCE

1. Electric Vehicle Motor /PM BLDC /, China Electric Motor Association,Guangdong M&C Electric Power for operation as electric CO Brushless machine with permanent magnets LTD

## Claims

1. Brushless electric machine with permanent magnets comprising a drive shaft (1) having fixed thereto a rotor yoke (2) of the magnetic system, on which yoke (2) are set firmly permanent magnets (3), and the rotor yoke (2) through the shaft (1) is supported on bearings in front and rear end bells (6,7), between them a housing (9) is closed, wherein is fixed a stator (10) with a plurality of slots on its inner surface and a three-phase winding is laid therein, and the said rotor yoke (2) is divided in equal parts (13), wherein on any two adjacent edges (15) of said parts (13) of the rotor yoke (2) is formed a common mounting pad (16), which is disposed in a plane perpendicular to the radius passing through the middle between the adjacent edges (15), forming said common mounting pads (16), and through the middle of the permanent magnets (3), which are mounted immovably on the common pads (16), wherein the adjacent edges (15) of the parts (13) are tapered and between them are formed void spaces (17), **characterized in that** the said equal parts (13) are fixed on one or more non- magnetic discs (14) which are attached immovably on the said shaft (1), and the said void spaces (17) are formed with trapezoidal cross-section with the small base A1 near the permanent magnets (3) and the large base A2 bounded by said non-magnetic discs (14) and the ratio of the larger base A2 towards the small base A1 is greater than 10.

## Patentansprüche

1. Bürstenlose elektrische Maschine mit Dauermagneten, die eine Antriebswelle [1] mit einem daran befestigten Läuferjoch [2] des magnetischen Systems umfasst, an welchem Joch [2] Dauermagnete [3] festgesetzt sind; das Läuferjoch [2] ist durch die Welle [1] in einer vorderen und einer hinteren Kappen [6, 7] gelagert, zwischen denen ein Gehäuse [9] geschlossen ist, in dem ein Ständer [10] mit einer Vielzahl von Schlitzen auf seiner Innenfläche befestigt ist, in die eine 3-Phasen-Wicklung gelegt ist; das erwähnte Läuferjoch [2] ist in gleiche Teile [13] geteilt, wobei an allen zwei benachbarten Kanten [15] der erwähnten Teile [13] des Läuferjochs [2] eine gemeinsame Montageunterlage [16] gebildet wird, die in einer Ebene senkrecht zu dem Radius angeordnet ist, der durch die Mitte zwischen den benachbarten Kanten [15], die die erwähnten gemeinsamen Montageunterlagen [16] bilden, und durch die Mitte der Dauermagnete [3], die unbeweglich auf den gemeinsamen Unterlagen [16] befestigt sind, verläuft, wobei die benachbarten Kanten [15] der Teile [13] abgeschrägt sind, und zwischen ihnen Leerräume [17] gebildet werden, **die dadurch gekennzeichnet sind, dass** die erwähnten gleichen Teile [13] auf einer oder mehreren nicht magnetischen Scheiben [14] befestigt sind, die unbeweglich auf der erwähnten Welle [1] angebracht sind, und die erwähnten Leerräume [17] werden mit einem trapezförmigen Querschnitt mit der kleinen Grundfläche A1 nahe bei den Dauermagneten /3/ und der großen, an die nicht magnetischen Scheiben [14] grenzenden Grundfläche A2, gestaltet, und das Verhältnis der großen Grundfläche A2 zu der kleinen Grundfläche A1 ist grösser als 10.

## Revendications

1. Machine électrique à aimants permanents sans balais comprenant un arbre d'entraînement avec une culasse de rotor fixe [2] fixée sur celle-ci par un système magnétique sur lequel la culasse [2] est fixée à l'aide d'aimants permanents [3] et la culasse de rotor [2] au moyen de l'arbre est roulement au moyen de roulements dans les couvercles avant et arrière [6, 7], entre lesquels est enfermé un logement [9] dans lequel un stator fixe [10] est fixé avec plusieurs rainures sur sa surface interne dans lesquelles un enroulement triphasé est appliqué, tel que la culasse de rotor / 2 / est divisé en parties égales / 13 /, comme sur chacune des deux extrémités adjacentes [15] sur lesdites parties [13] de la chape de rotor / 2 / une plate-forme de montage commune [16] est formée , laquelle est située dans un plan perpendiculaire au rayon passant par la carrure entre des bords adjacents [15] formant les plates-formes de montage communes [16] et au milieu des aimants permanents [3], qui sont fixés sur un des sites communs [16], comme les extrémités adjacentes [15] de ces parties [13] sont coniques et entre eux sont formés des espaces [17], **caractérisé en ce que** lesdites parties identiques [13] sont montés sur un ou plusieurs nemagni Notre disque [14] qui sont montés de façon rigide sur ledit arbre [1] et lesdits espaces [17] sont formés avec une section transversale trapézoïdale avec la petite base A1 à proximité des aimants permanents [13] et une grande base A2 bordant avec des disques non magnétiques [14] et le rapport de la grande base A2 à la petite base A1 est supérieur à 10.
